(19) Europäisches Patentamt
European Patent Office
Office européen des brevets

(11) **EP 1 136 458 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.05.2020 Patentblatt 2020/21**

(45) Hinweis auf die Patenterteilung:
**05.10.2011 Patentblatt 2011/40**

(21) Anmeldenummer: **01104579.6**

(22) Anmeldetag: **06.03.2001**

(51) Int Cl.:
***C04B 24/38*** (2006.01)

(54) **Verwendung von Polysacchariden oder Polysaccharidderivaten, die nach Vergelung und Heiss-Dampf-Mahltrocknung mittels Gas- oder Wasserdampftrocknung hergestellt wurden, in Baustoffgemischen**

Use in building material mixtures of polysaccharides or their derivatives, produced after gelation and hot vapour mill-drying by gas or water vapour drying,

Utilisation dans les mélanges de matériaux de construction, de polysaccharides ou leurs dérivés, produits après gélification et séchage-broyage sous vapeurs chaudes par séchage à gaz- ou à vapeur d'eau

(84) Benannte Vertragsstaaten:
**AT BE CH CY DE DK ES FI FR GB GR IE IT LI LU MC NL PT SE TR**

(30) Priorität: **18.03.2000 DE 10013577**

(43) Veröffentlichungstag der Anmeldung:
**26.09.2001 Patentblatt 2001/39**

(73) Patentinhaber: **Dow Global Technologies LLC Midland, MI 48674 (US)**

(72) Erfinder:
- **Kiesewetter, René, Dr.**
  **29649 Wietzendorf (DE)**
- **Schlesiger, Hartwig, Dr.**
  **29683 Fallingbostel (DE)**
- **Morning, Martin, Dr.**
  **29699 Bomlitz (DE)**
- **Weber, Gunter, Dr.**
  **29683 Fallingbostel (DE)**
- **Lange, Werner, Dr.**
  **27374 Visselhövede (DE)**

(74) Vertreter: **f & e patent**
**Fleischer, Engels & Partner mbB, Patentanwälte**
**Braunsberger Feld 29**
**51429 Bergisch Gladbach (DE)**

(56) Entgegenhaltungen:
EP-A- 0 370 447    EP-A- 1 127 895
EP-A2- 0 835 881    WO-A1-98/31710

DE-A- 19 754 064    DE-A1- 19 549 441
DE-B- 2 458 998    DE-C1- 19 541 945
GB-A- 2 262 527    US-A- 4 415 124

- **DATABASE WPI Week 197930 Derwent Publications Ltd., London, GB; AN 1979-55315B XP002259809 & JP 54 074855 A (TAKEDA CHEM IND)**
- **Letter from Dr. Perchenek to EPO dated October 13, 2006**
- **Kirk-Othmer: Encyclopedia of Chemical Technology, vol. 4, 1964, pages 646-647,**
- **P C Hewlett: "Lea's Chemistry of Cement and Concrete", 1998 pages 765-766,**
- **Untersuchungsbericht de SE Tylose GmbH & Co. KG, Komgrossenverteilung**
- **Untersuchungsbericht de SE Tylose GmbH & Co. KG, Wasserrüchhaltung**
- **Laserbeugung: Partikelgrossbestimmung nach ISO 13320; www.quantachrome.de**
- **Gmehling, J. et al: "Grundoperationen", 1996 pages 418-419,**
- **Wikipedia: ?Putz (Baustoff)'**
- **International Standard ISO 13007-1**
- **International Standard ISO/FDIS 13007-3**
- **Datenblatt Vinnapass 5010 N**
- **Wikipedia 'Fliesenkleber'**
- **Datenblatt Ardex S7**

EP 1 136 458 B2

**Beschreibung**

Die vorliegende Erfindung betrifft die Verwendung von Polysacchariden oder Polysaccharidderivaten, insbesondere Polysaccharidether, vorzugsweise Celluloseether in mineralisch gebundenen Fliesenklebern, wobei die Celluloseether nach Vergelung und Heiß-Dampf-Mahltrocknung mittels Gas- oder Wasserdampftrocknung hergestellt werden.

Dem Einsatz von Polysacchariden bzw. Polysaccharidethern, insbesondere Celluloseethern, kommt in den verschiedensten Anwendungssystemen unterschiedliche Bedeutung zu. In Abhängigkeit von der Art des Celluloseethers und seiner Konzentration und seinem Molekulargewicht wirken die Produkte in den jeweiligen Formulierungen verdickend und zeigen unterschiedliche thixotrope und/oder strukturviskose Eigenschaften und steuern darüber wiederum die Verarbeitungseigenschaften, die je nach Anwendungsgebiet (z.B. Einsatz in Lebensmitteln, Pharma, Kosmetik u.a.) unterschiedliche Zielgrößen beinhalten [s. z.B. Ullmann's Encyclopedia of Industrial Chemistry, Vol. 5A, Verlag Chemie, Weinheim/New York, 1986]. Bei der hier vorliegenden Anmeldung der erfindungsgemäß hergestellten Celluloseether werden Anwendungen in mineralisch gebundenen Fliesenklebern betrachtet.

Die in Fliesenklebern eingesetzten Celluloseether müssen eine ausreichend hohe Verdickungswirkung (Konsistenz) und Wasserrückhaltung sicherstellen. Zudem werden dadurch die Haftung zum Untergrund sowie die Standfestigkeit deutlich verbessert. Der mit dem Celluloseether formulierte Fliesenkleber muß eine ausreichend hohe Abrutschfestigkeit besitzen sowie sehr gute Werte für die Haftzugfestigkeit bei unterschiedlichen Lagerbedingungen der Fliesen, auch unter kritischen Bedingungen (z.B. Warmlagerung bei 70°C, Lagerung unter Frost-Tau-Wechsel-Bedingungen, Wasserlagerung) aufweisen.

Dokument DE 19754064 beschreibt ein Verfahren zur Herstellung von pulverförmigen Polysaccharidderivaten, insbesondere Cellulosederivaten mit thermischem Flockpunkt. Auch in der EP 1127895 wird ein Verfahren zur Herstellung von pulverförmigen wasserlöslichen Cellulosederivaten, bevorzugt solchen mit thermischem Flockpunkt, beschrieben. In der US 4,415,124 wird ein Verfahren zur Herstellung von Mikropulvem aus Celluloseethern oder Cellulose, die durch bekannte Methoden bisher nicht zugänglich sind, offenbart. In der DE2458998 wird ein Verfahren zur Feinmahlung von Cellulose oder deren Derivaten mit Ethergruppen auf einer Schwingmühle beschrieben. Die EP 0370447 beschreibt ein Verfahren und Vorrichtung zur produktschonenden Mahlung und gleichzeitigen Trocknung von feuchten Celluloseethern.

Überraschenderweise wurde gefunden, dass die nach EP-A 09 54 536, DE-A 19 754 064 bzw. WO 98/317 10 gefertigten Polysaccharide oder Polysaccharidderivate, insbesondere Celluloseether mit thermischem Flockpunkt, die einer Vergelung bzw. Lösung in 35 bis 99 Gew.-% Wasser und anschließender Mahltrocknung unterzogen wurden, besonders vorteilhafte Eigenschaften in mineralisch gebundenen Baustoffgemischen, nämlich Fliesenklebern, aufweisen.

Gegenstand der Erfindung ist daher die Verwendung von Polysaccharide oder Polysaccharidderivaten als Komponenten von Baustoffgemischen, wobei die Polysaccharidderivate erhältlich sind durch

a) Auflösen oder Quellen des Polysaccharids oder Polysaccharidderivats in 35 bis 99 Gew.-% Wasser, bezogen auf das Gesamtgewicht,

b) Überführung des Wassers aus dem gequollenen oder gelösten Polysaccharid oder Polysaccharidderivat in die Dampfphase und gleichzeitige Überführung des gelösten oder gequollenen Polysaccharids oder Polysaccharidderivats in den Festkörperzustand durch Eintrag mittels eines Gasstroms in ein Mahlwerk, wobei durch den Gasstrom das Wasser aus dem Polysaccharid oder Polysaccharidderivat ausgetrieben wird,

c) Abtrennung der Feststoffpartikel des Polysaccharids oder Polysaccharidderivates vom Gasstrom und gegebenenfalls Trocknung des Polysaccharids oder Polysaccharidderivats, dadurch gekennzeichnet, dass die Baustoffgemische mineralisch gebundene Systeme und Fliesenkleber sind.

Bevorzugt sind die Polysaccharide oder Polysaccharidderivate erhältlich durch

a) Auflösung oder Quellung des Polysaccharids oder Polysaccharidderivates in 50 bis 80 Gew.-% Wasser, bezogen auf das Gesamtgewicht.

b) Überführung des Wassers aus dem gequollenen oder gelösten Polysaccharids oder Polysaccharidderivat in die Dampfphase und gleichzeitige Überführung des gelösten oder gequollenen Polysaccharids oder Polysaccharidderivates in den Festkörperzustand durch Eintrag des gelösten oder gequollenen Polysaccharids oder Polysaccharidderivates in eine Hochdrehzahl-Gasstrom-Prallmühle, wobei durch den Gasstrom eines überhitzten Wasserdampf/Inertgas-Gemisches oder Wasserdampf-Luft-Gemisches mit einem Wasserdampfanteil von 40 bis 99 Gew.-%, bezogen auf das Wasserdampf/Inertgas-Gemisch oder Wasserdampf/Luft-Gemisch, das Wasser aus dem Polysaccharid oder Polysaccharidderivat ausgetrieben wird,

c) Abtrennung der Feststoffpartikel des Polysaccharids oder Polysaccharidderivates vom Gasstrom und ggf. Trocknung des Polysaccharidderivats.

Die erfindungsgemäß verwendeten Polysaccharide oder Polysaccharidderivate, bevorzugt Celluloseether, besonders bevorzugt Methylhydroxyethylcelluloseether, zeigen bei Einsatz in Fliesenklebern verbesserte Haftzugfestigkeiten und/oder einen schnelleren Aushärtebeginn des Klebers.

Vorzugsweise werden die erfindungsgemäß verwendeten Produkte nach einem Verfahren hergestellt, das wie folgt aussieht:

a) ein Polysaccharid oder Polysaccharidderivat, insbesondere Cellulosederivat, vorzugsweise Celluloseether wird in einer ausreichenden Menge von 50 bis 80 Gew.-%, bevorzugt 65 bis 78 Gew.-% Wasser, bezogen auf das Gesamtgewicht, gequollen oder gelöst und anschließend

b) in einer Hochdrehzahl-Gasstrom-Prallmühle durch den Gasstrom eines überhitzten Wasserdampf/Inertgas-Gemisches oder Wasserdampf/Luft-Gemisches mit einem Wasserdampfanteil von 40 bis 99 Gew.% bezogen auf das Wasserdampf/Inertgas-Gemisch oder Wasserdampf/Luft-Gemisch, wird das Wasser aus dem gequollenen oder gelösten Polysaccharid oder Polysaccharidderivat, in die Dampfphase und das gelöste oder Polysaccharid oder gequollene Polysaccharidderivat in den Festkörperzustand in Form feinteiliger Feststoffpartikel überführt.

c) die erhaltenen Feststoffpartikel werden vom Gasstrom abgetrennt und dann gegebenenfalls getrocknet.

Das Verfahren ist gegenüber dem Stand der Technik wie z.B. in EP-A-0 049 815, EP-A-0 370 447, EP-A-0 348 046, EP-A-0 835 881, GB-A-2 262 527 beschrieben, deutlich wirtschaftlicher, da das Wärmeträgergas aus überhitztem Wasserdampf/Inertgas-Gemisch oder Wasserdampf/Luft-Gemisch besteht und die zur Mahlung eingetragene Energie wiederum in Wärmenergie umgewandelt wird und sich damit wieder im Wärmeträgergas wiederfindet und somit genutzt werden kann.

Nach dem oben bezeichneten Verfahren lassen sich eine Vielzahl von Polysacchariden, Polysaccharidderivaten, insbesondere Celluloseethern mit oder ohne thermischem Flockpunkt ökonomisch herstellen und in verschiedensten Anwendungsgebieten einsetzen.

Erfindungsgemäß werden die Polysaccharidderivate, insbesondere Celluloseether in Baustoffmischungen, nämlich mineralisch gebundenen Fliesenkebern, verwendet.

Es können erfindungsgemäß sowohl ionische wie auch nicht-ionische Polysaccharide oder Polysaccharidderivate, insbesondere Polysaccharidether und -ester, insbesondere Celluloseether, mit thermischem Flockpunkt als auch ohne einen thermischen Flopunkt in den genannten Anwendungsgebieten eingesetzt werden. Als-besonders bevorzugte Celluloseether und Celluloseester, die nach einem der vorgenannten Verfahren in den oben genannten Einsatzgebieten zur Anwendung kommen, werden solche verwendet, die mindestens einen oder mehrere (sogenannte binäre oder ternäre Mischether) der nachfolgend bezeichneten Substituenten besitzen. Als solche seien genannt:

Hydroxethyl-, Hydroxypropyl-, Hydroxybutyl-, Methyl-, Ethyl-, Propyl-, Benzyl-, Phosphonomethyl-, Phosphonoethyl-, Dihydroxypropyl-, Carboxymethyl-, Sulfomethyl-, Sulfoethyl-, hydrophobe langkettige verzweigte und nicht verzweigte Alkylreste, hydrophobe langkettige verzweigte und nicht verzweigte Alkylarylreste oder Arylalkylreste, N,N-Diethylaminoalkyl- und kationische oder kationisierte Reste sowie Acetat-, Propionat-, Butyrat-, Lactat-, Nitrat-, Sulfatgruppen.

Exemplarisch seien für die erfindungsgemäß beanspruchten Polysaccharidderivate, insbesondere Polysaccharidether und -ester, folgende Produkte hervorgehoben:

A) Cellulosederivate, insbesondere Celluloseether, wie z.B. Hydroxyalkylcellulosen [Hydroxyethylcellulose (HEC), Hydroxypropylcellulose (HPC), Hydroxypropylhydroxyethylcellulose (HPHEC)], Carboxyalkylcellulosen [Carboxymethylcellulose (CMC)], Carboxyalkylhydroxyalkylcellulosen [Carboxymethylhydroxyethylcellulose (CMHEC), Carboxymethylhydroxypropylcellulose (CMHPC)], Sulfoalkylcellulosen [Sulfoethylcellulose (SEC), Sulfopropylcellulose (SPC)], Carboxyalkylsulfoalkylcellulosen [Carboxymethylsulfoethylcellulose (CMSEC), Carboxymethylsulfopropylcellulose (CMSPC)], Hydroxyalkylsulfoalkylcellulosen [Hydroxyethylsulfoethylcellulose (HESEC), Hydroxypropylsulfoethylcellulose (HPSEC), Hydroxyethylhydroxypropylsulfoethylcellulose (HEHPSEC)], Alkyl-Hydroxyalkylsulfoalkylcellulosen [Methylhydroxyethylsulfoethylcellulose (MHESEC), Methylhydroxypropylsulfoethylcellulose (MHPSEC), Methylhydroxyethylhydroxypropylsulfoethylcellulose (MHEHPSEC)], Alkylcellulosen [Methylcellulose (MC), Ethylcellulose (EC)], Alkylhydroxyalkylcellulose [Methylhydroxyethylcellulose (MHEC), Ethylhydroxyethylcellulose (EHEC), Methylhydroxypropylcellulose (MHPC), Ethylhydroxypropylcellulose (EHPC)], Alkenylcellulosen und ionische und nicht-ionische Alkenylcellulosemischether [z.B. Allylcellulose, Allylmethylcellulose, Allylethylcellulose, Carboxymethylallylcellulose)], Dialkylaminoalkylcellulosen [z.B. N,N-Dimethylamino-ethylcellulose, N,N-Diethylaminoethylcellulose], Dialkylaminoalkylhydroxyalkylcellulosen [z.B. N,N-Dimethylaminethylohydroxy-ethylcellulose, N,N-Dimethylaminethylo-hydroxyproypylcellulose], Aryl-und Arylalkyl- und Arylhydroxyalkylcellulosen [z.B. Benzylcellulose, Methylbenzylcellulose, Benzylhydroxyethylcellulose] sowie Umsetzungsprodukte der vorgenannten Celluloseether mit hydrophob modifizierten Glycidylethern, die Alkylreste mit $C_3$ bis $C_{15}$- oder Arylalkylreste mit $C_7$ bis $C_{15}$-Kohlenstoffatome besitzen.

B) Stärke und Stärkederivate, insbesondere Stärkeether, besonders bevorzugt kalt- und heißwasserlösliche Stärkeether, wie z.B. oxidierte, hydroxyalkylierte, carboxyalkylierte, alkylierte, Stickstoff enthaltende kationisierte oder kationische Stärkeether.

C) Galaktomannane, wie Johannesbrotkernmehl, Guar und Guarderivate, insbesondere Guarether, wie z.B. Hydroxyethylguar, Hydroxypropylguar, Methylguar, Ethylguar, Methylhydroxyethylguar, Methylhydroxypropylguar und Carboxymethylguar.

D) Alginate und Derivate hiervon.

E) Physikalische Abmischungen von Celluloseethern, wie z.B. von Methylhydroxyethylcellulose mit Carboxymethylcellulose. Abmischungen von Stärkeethern, wie z.B. Hydroxyethylstärke mit kationischer Stärke und/oder carboxymethylierter Stärke. Abmischungen von Guarethern, wie z.B. Hydroxyethylguar mit Methylguar. Sowie Abmischungen von Celluloseethern mit Stärkeethern und/oder Guarethern, wie z.B. Methylhydroxyethylcellulose mit Hydroxypropylstärke und Hydroxypropylguar.

F) Cellulose- und Stärkeester, wie z. B. Cellulosenitrat, -acetat, butyrat.

Besonders bevorzugte Polysaccharide bzw. Polysaccharidderivate sind Cellulosederivate, insbesondere wasser- und oder organolösliche Celluloseether, wie z.B. Methylcelluloseether (MC), Ethylcelluloseether (EC), Carboxymethylcelluloseether (CMC) [vorzugsweise Salze hiervon, wie z.B. Natrium-Carboxymethylcelluloseether], Methylhydroxyethylcellulose (MHEC), Methylhydroxypropylcellulose (MHPC), Ethylhydroxyethylcellulose (EHEC), Ethylhydroxypropylcellulose (EHPC), Methylhydroxyethylhydroxypropylcellulose (MHEHPC), Hydroxyethylcellulose (HEC) und Hydroxypropylcellulose (HPC) sowie Umsetzungsprodukte der vorgenannten Celluloseether mit Reagenzien, die langkettige lineare oder verzweigte Alkylgruppen mit $C_2$ bis $C_{18}$- oder Arylalkylgruppen mit $C_7$ bis $C_{15}$-Kohlenstoff atomen enthalten.

Der Anteil der an den jeweiligen Formulierungen eingesetzten Celluloseether ist abhängig vom jeweiligen Anwendungsgebiet und Einsatzzweck und liegt je nach Anwendung bei 0,01 - 50 Gew.-%, insbesondere 0,01 - 10 Gew.-% bezogen auf die Gesamtmenge an Trockensubstanz.

Dem Fachmann ist bekannt, dass Celluloseether üblicherweise nicht allein, sondern mit einer Reihe von Zusatzstoffen und/oder Modifizierungsmitteln in den Formulierungen eingesetzt werden, um so bestimmte Effekte bei der Verarbeitung zu verbessern. So können die in Fliesenklebern Verwendung findenden Celluloseether z. B. mit Hydrokolloiden, Kunststoffdispersionspulvern, Entschäumern, Quellmitteln, Füllstoffen, Leichtzusatzstoffen, Polyacrylaten, Polyacrylamiden, Hydrophobierungsmitteln, Luftporenbildnern, synthetischen Verdickern, Dispergierhilfsmitteln, Verflüssigern und/oder Vergerern bzw. Verzögerungsgemischen und/oder Beschleunigern- und/oder Stabilisatoren abgemischt werden. Typische Füllstoffe sind Quarzsand, Dolomit, Kalksteinsand, Calciumsulfat-Dihydrat u.a. oder deren Mehle.

Baustoffgemische auf Gips-, Kalkydrat- und Zementbasis besitzen üblicherweise folgende Zusammensetzung (Trockenmasse):

99,99 - 1 Gew.-% Gips, Kalkhydrat, Zement oder Kalkhydrat/Zement
0,001 - 5 Gew.-% herkömmliche bzw. erfindungsgemäß beanspruchte Celluloseether
0 - 90 Gew.-% Quarzsand oder Kalksteinsand
0 -10 Gew.-% Kunststoffdispersionspulver
0 - 10 Gew.-% Leichtzusatzstoffe
0 - 1 Gew.-% Hydrophobierungsmittel
0 - 0,5 Gew.-% Stärkeether
0 - 0,1 Gew.-% Luftporenbildner

Den Baustoffgemischen wird üblicherweise soviel Wasser hinzugegeben, bis die gewünschte Konsistenz erreicht ist. Art, Zusammensetzung und Verarbeitung der Baustoffgemische sind dem Fachmann bekannt [s. z. B. Produktbroschüre der Wolff Walsrode AG "Walocel® M - Methylcellulosen für Putz- und Mauermörtel" 02/1996].

Art und Anteil der jeweiligen Hilsmittel oder Zuschlagstoffe sind dem Fachmann allgemein bekannt. Eine Beschränkung auf die vorgenannten Zusätze besteht nicht. Je nach anwendungstechnischen Erfordernissen kann das Putzsystem weitere Additive enthalten [s. hierzu auch: I. Schrage in: "Ullmanns Enzyklopädie der technischen Chemie", Bd. 9, Verlag Chemie, Weinheim, New York, 1974, S. 312 ff und dort zitierte Literatur sowie z.B. DE-A-19 541 945; DE-A-19 543 933; EP-A-0 458 328, US 5,047,086.

**Beispiel**

In den nachfolgend aufgeführten Ausführungs- und Vergleichsbeispielen wird das Wesen der erfinderischen Tätigkeit exemplarisch beschrieben. Die erfindungsgemäß beanspruchten Celluloseether werden dabei jeweils mit einer handelsüblichen Methylhydroxyethylcellulose verglichen.

Bei den erfindungsgemäß beanspruchten, weiter unten beispielhaft erwähnten Celluloseethern haben die Bezeichnungen "DS" (Durchschnittlicher Substitutionsgrad) und "MS" (Molarer Substitutionsgrad) die dem Fachmann bekannte Bedeutung. Der "DS" bezeichnet die Durchschnittsanzahl der in der Cellulose substituierten Hydroxylgruppen pro Anhydroglukoseeinheit. Der "MS" kennzeichnet die Durchnittsanzahl der Mole, der mit der Cellulose kombinierten Reaktionspartner pro Anhydroglukoseeinheit.

In den weiter unten bezeichneten Beispielen wird die Bestimmung der Viskositäten 2 Gew.-%-iger wässriger Lösungen mit destilliertem Wasser mit einem Roationsviskosimeter vom Typ Haake, Typ RV 100, System M 500, Meßeinrichtung MV, nach DIN 53 019, bei einem Schergefälle von $D = 2,5\,s^{-1}$, bei einer Temperatur von 20°C durchgeführt.

Beispielhaft wird das Wesen der Erfindung anhand der weiter unten bezeichneten Anwendungen beschrieben. Dabei werden stets Methyl-Hydroxyethylcelluloseether (MHEC) als Celluloseether eingesetzt. Die erfindungsgemäß eingesetzten Methyl-Hydroxyethylcelluloseether entsprechen in der Art der Herstellung (Alkalisierung, Veretherung, Reinigung) und in der Substitution (DS-Methyl und MS-Hydroxyethyl) exakt dem jeweiligen Referenzmuster. Im Unterschied zum Stand der Technik werden die erfindungsgemäß beanspruchten Methyl-Hydroxyethylcelluloseether in der weiter oben bezeichneten Weise mit 65 bis 78 Gew.-% Wasser, bezogen auf das Gesamtgewicht, gequollen oder gelöst. In einer Hochdrehzahl-Gasstrom-Prallmühle wird anschließend durch den Gasstrom eines überhitzten Wasserdampf/Inertgas-Gemisches oder Wasserdampf/Luft-Gemisches mit einem Wasserdampfanteil von 40 bis 99 Gew.% bezogen auf das Wasserdampf/Inertgas-Gemisch oder Wasserdampf/Luft-Gemisch, das Wasser aus dem gequollenen oder gelösten Celluloseether in die Dampfphase und der gelöste oder gequollene Celluloseether in den Festkörperzustand in Form feinteiliger Feststoffpartikel überführt. Die so erhaltenen Feststoffpartikel werden vom Gasstrom abgetrennt und getrocknet.

Die Prozentangaben bedeuten Gewichtsprozent. Die Bezeichnungen "min" und "s" stehen für Minuten bzw. Sekunden; die Bezeichnung "UpM" für "Umdrehungen pro Minute". Mit "DS-Me" und "MS-HE" wird die Höhe der Substitution durch Methyl-und Hydroxyethylgruppen bezeichnet. Die Kürzel "PP" und "PF" bezeichnen den Mahlfeinheitsgrad des verwendeten Produktes und stehen für Feinstpulver ("PP") und Feinpulver "PF". Die Sieblinien werden jeweils beispielhaft erwähnt.

Mit den Bezeichnungen "WRV" und "Differenz WRV" werden die Höhe des Wasserrückhaltevermögens bzw. der Abfall des Wasserrückhaltevermögens bei einer Temperaturerhöhung von 20°C auf 40°C in Prozentpunkten bezeichnet.

Der Wasser-Feststoff-Faktor (W/F) ist wie folgt definiert:

$$W/F = \text{Wasserdurchsatz} / [\text{Naßmörteldurchsatz} - \text{Wasserdurchsatz}]$$

(s. o. g. Produktbroschüre der Wolff Walsrode AG).

Für die Bestimmung der Sieblinien werden die Celluloseether mittels einer Siebmaschine mit Sieben nach DIN 4188 ausgesiebt. Es werden Siebe mit Maschenweiten von 0,25 mm, 0,20 mm; 0,16 mm, 0,125 mm, 0,100 mm und 0,063 mm verwendet.

Die Zusammensetzung der in den Beispielen bezeichneten Baustoffgemische geht aus Tabelle 1 hervor. Die dort bezeichneten Angaben stellen Gewichtsteile dar.

Tabelle 1: Zusammensetzung der in den Beispielen bezeichneten Baustoffgemische

| Art der Komponenten | | Fliesenkleber | |
|---|---|---|---|
| Portlandzement | | 400 | |

(fortgesetzt)

| Art der Komponenten | | Fliesenkleber | |
|---|---|---|---|
| Kalkhydrat | | - | |
| Quarzsand | | 585 | |
| Celluloseether | | 40 | |
| Hydrophobierungsmittel | | - | |
| Luftporenbildner | | - | |
| Cellulosefasern | | - | |
| Kunststoffdispersionspulver | | 15 | |

Erfindungsgemäße Verwendung im Fliesenkleber:

Für die Versuche in Fliesenklebern wird als Kunststoffdispersionspulver Elotex WS 45®, Firma Elotex AG, verwendet. Der für Austestungen in Fliesenklebern verwendete Portlandzement hat die Bezeichnung CEM I 42,5R, Werk Lägerdorf/Fa. Alsen-Breitenburg. Als Sand wird hierbei Quarzsand mit der Feinheit F34, Quarzwerke Frechen eingesetzt. Als Celluloseether wird das Produkt Walocel® MKX 40000 PP01, Wolff Walsrode AG, als Vergleichsstandard verwendet. Die in Tabelle 1 bezeichneten Mengen an Trockensubstanz werden in einem Polybeutel abgewogen und ca. 5 Min per Hand gut durch mehrfaches Schütteln homogen durchmischt, wobei etwaige Zementklumpen vorher zerdrückt werden. Mit den in Tabelle 1 bezeichneten Mengen wird durch Zusatz von Wasser ein Wasser-Feststoff-Faktor von 0,23 eingestellt und der so erhaltene Fliesenkleber nach den weiter unten aufgeführten Prüfmethoden untersucht.
Tabelle 2 sind die Produktkenndaten der Celluloseether zu entnehmen, die als Vergleichsmuster in den nachfolgend bezeichneten Beispielen eingesetzt wurden.

Tabelle 2: Produktkenndaten der zu Vergleichszwecken eingesetzten Celluloseether

| Bezeichnung des Pröduktes [1] | DS-Me | MS-HE | Viskosität [mPa·s] |
|---|---|---|---|
| | | | |
| Walocel® MKX 40 000 PP01 | 1,59 | 0,29 | 38.600 |
| | | | |
| [1] Handelsprodukte der Wolff Walsrode AG | | | |

Ergebnisse der Untersuchungen in Fliesenklebern

Mit den erfindungsgemäß beanspruchten Celluloseethern wurden Versuche im Bereich Fliesenkleber im Vergleich zum Vergleichsmuster Walocel® MKX 40000 PP 01 (= Handelsprodukt der Wolff Walsrode AG) durchgeführt. Die Ergebnisse werden nachfolgend diskutiert.
Tabelle 6 sind die Viskositäten der Muster zu entnehmen.

Tabelle 6: Viskositäten der für Austestungen im Bereich Fliesenkleber verwendeten Produkte

| Muster | Viskosität [mPa.s] |
|---|---|
| Walocel® MKX 40000 PR 01 [1] | 38.6.00 |
| erfindungsgemäßes Muster 4 | 38.003 |
| Muster 5 | 37.414 |
| [1] Referenzprobe (= Stand der Technik) | |

Die Muster sind hinsichtlich ihrer Viskositätsergiebigkeiten sehr gut miteinander zu vergleichen. Signifikante Unterschiede werden nicht aufgenommen. Auch zeigen die Sieblinien der Produkte praktisch identische Werte (Tabelle 7).

Tabelle 7: Sieblinien der in Fliesenklebern eingesetzten Celluloseether im Vergleich

| Muster | Siebanalyse [%] [2] | | | | | |
|---|---|---|---|---|---|---|
| | <0,250 mm | <0,200 mm | <0,160 mm | <0,125 mm | <0,100 mm | <0,063 mm |
| walpcel® MKX 40.000 PP01 [1] | 100 | 99,9 | 99,5 | 97,3 | 91,9 | 61,8 |
| erfindungsgemäßes Muster 4 | 99,7 | 99,0 | 95,7 | 89,1 | 80,2 | 54,5 |
| erfindungsgemäßes Muster 5 | 100 | 99,9 | 99,4 | 95,5 | 89,6 | 68,4 |
| [1] Referenzprobe (= Stand der Technik) | | | | | | |
| [2] Sieblinie nach Siebung über Siebe mit Maschenweiten 0,25 mm; 0,20 mm; 0,16 mm; 0,125 mm; 0,1 00mm; 0,063 mm | | | | | | |

Die weiteren Untersuchungen konzentrieren sich auf folgende Punkte:

• Standfestigkeit, Scherstabilität und Anrührverhalten

Hierfür wird der Fliesenkleber im Becher vorgelegt und die entsprechende Menge Wasser dazugegeben. Nach dem Betätigen einer Stoppuhr wird nun 30 s mit einem Holzstab gut durchgerührt. Anschließend wird die Standfestigkeit des Fliesenklebers an dem hochgehaltenen Rührholz visuell beurteilt. Eine vollkommene Standfestigkeit, bei der sich der Fliesenkleber am Rührholz nicht bewegt, entspricht einer Bewertung von 100% Standfestigkeit; ein Wert von < 80% bedeutet z.B., dass der Kleber eine zu dünne Konsistenz hat und sich nicht mehr vernünftig auf den Holzstab aufbringen läßt. 5 Min nach dem Anrührbeginn wird die Probe nochmals 1 Min lang gut durchgerührt und zum zweiten Mal die Standfestigkeit (= Scherstabilität) beurteilt.

Beurteilung der Scherstabilität und des Anrührverhaltens

Die Beurteilung des Anrührverhaltens für die mit den in Tabelle 6 konfektionierten Celluloseethern ist überall identisch (= 97,5% Standfestigkeit). Die Muster sind normal einrührbar und zeigen eine stetig zunehmende Verdickung. Die Standfestigkeiten- bzw. Scherstabilitäten nach 30 s sowie die Beurteilung des Rührverhaltens nach der 5. und 6. Minute sind überall identisch. Die Scherstabilität nach 6 Minuten liegt überall auf gleichem Niveau. Unterschiede werden nicht aufgenommen.
Weitere Parameter, die überprüft wurden sind:

• **Aufbruch**

Geprüft wird hierbei die Verpreßbarkeit von Fliesenkleberstegen in Abhängigkeit von der eingesetzten Anmachwassermenge. Dabei wird auf einen aufgekämmten Fliesenkleber eine 10 x 10 cm-Glasplatte gelegt. Nach Belastung mit einem Gewicht wird die Verpreßbarkeit der Fliesenkleberstege anhand der Benetzung der Glasplatte ermittelt. Dafür wird der Fliesenkleber in der oben bezeichneten Weise angerührt und die Standfestigkeit nach 30 s sowie die Scherstabilität nach 5 Min bestimmt. Nach 7 Min wird der Fliesenkleber auf eine 10 x 10 cm Plexiglasplatte aufgetragen und mit einem Kammspachtel (6 x 6 mm; 60°-Stellung) abgekämmt. Die Stoppuhr wird anschließend auf "Null" gestellt. 10 Min nach dem Aufkämmen wird die Glasplatte so auf den Kleber gelegt, dass die beiden Außenkanten in der Stegmitte aufliegen. Daran anschließend wird sofort mit einem Gewicht von 2,21 kg 30 s mittig belastet. Die Benetzung der aufgelegten Glasplatte wird mittels Lineal oder einer Gitterfolie in Prozent angegeben.

• **Abrutschfestigkeit**

Bei der Bestimmung der Abrutschfestigkeit des Fliesenklebers wird der Fliesenkleber auf eine Abrutschplatte [Höhe: 220 mm; 200 x 250 mm, Material: PVC] aufgekämmt [Kammspachtel 4 x 4 mm]. Man ermittelt dann mit einer gewogenen Fliese und Zusatzgewichten [Gewichte ä 50 g] das maximale Gewicht einer Fliese [Steinzeugfliese 10 x 10 cm; 200 g], die von dem Kleber gerade noch gehalten wird. Angegeben wird das Abrutschen der Fliesen nach 30 s ohne Zusatzgewicht in mm bzw. das maximale Fliesengewicht in Gramm pro cm$^2$ [g/cm$^2$].

**• Offenzeit**

Bei der Bestimmung der Offenzeit wird die Zeitspanne ermittelt, in der es möglich ist, in ein aufgekämmtes Fliesenkleberbett Fliesen einzulegen. In einen aufgekämmten Fliesenkleber werden Fliesen nach definierten Zeit [5/10/15/20/25/30 Min] eingelegt und später wieder abgenommen. Anschließend wird die Benetzung der Rückseiten der Fliesen beurteilt. Für die Durchführung der Untersuchungen werden 100 g Fliesenkleber in einem Becher ä 200 mL vorgelegt. Eine definierte Menge Wasser wird hinzugegeben. Die Stoppuhr wird gedrückt, und anschließend wird 1 Min gerührt, 3 Min stehengelassen und wiederum 1 Min gerührt. Der Fliesenkleber wird anschließend auf eine Etermitplatte [40 x 20 cm] aufgestrichen und mit einem Kammspachtel [4 x 4 mm] aufgekämmt. Die Stoppuhr wird auf "Null" gestellt. Nach weiteren 5 Min wird die erste Fliese eingelegt und 30 s mit einem 3 kg Gewicht belastet. Im Abstand von 5 Min werden anschließend weitere Fliesen eingelegt und ebenfalls mit 3 kg belastet. Nach 40 Min werden alle Fliesen abgenommen und umgedreht. Die Benetzung der Fliesenrückseite mit Fliesenkleber wird mit einer Gitterfolie in Prozent (gerundet auf 5%) angegeben. Als Offenzeit wird die Zeit in Min angegeben, bei der Werte von ≥ 50% Kleber auf der Fliesenrückseite festgestellt werden.

**• Haftzugfestigkeiten** für Normal-, Warm- und Wasserlagerung sowie Frost/Tau-Wechsellagerung nach EN 1348

**• Abbindezeit**

Geprüft wird der Abbindeverlauf vom Anrühren eines Fliesenklebers über den Abbindebeginn bis zum Abbindeende. Das Prinzip geht dahin, dass durch das Eindringen einer Nadel [automatisches Penetrometer nach Vicat] in den Fliesenkleber die Abbindezeit ermittelt wird. Für die Durchführung der Versuche wird vorab der Wasser-Feststoff-Faktor ermittelt bzw. festgelegt. Mindestens 400 g des zu prüfenden Fliesenklebers werden mit der zu ermittelnden Wassermenge 1 Min per Hand angerührt und sofort, möglichst luftblasenfrei, unter leichtem Stochern in einen vorher eingefetteten Hartgummikonus [Höhe: 40 mm] gefüllt. Anschließend wird die Oberfläche ohne Druck unter sägender Bewegung mit einem breiten Spachtel plan abgezogen. Bevor die Probeoberfläche mit Weißöl [Typ P 420] abgedeckt wird, bestreicht man den äußeren Rand etwa 0,5 cm dick mit Fliesenkleber, um so ein Herunterlaufen des Öles zu vermeiden. Das Öl verhindert die Hautbildung und das Anhaften von Fliesenklebermaterial an der Prüfnadel. Der Konus wurde mit der breiteren Öffnung nach unten auf eine vorher gefettete Glasplatte [Durchmesser: 120 mm] gestellt. Die Glasplatte, die mit dem Konus gefüllt wurde, wird auf den Stativfuß des Vicatgefäßes gestellt. Die Messung erfolgt so lange bis der Fliesenkleber vollständig abgebunden ist und die Nadel höchstens 1 bis 2 mm eindringt. Die Abstände der Meßpunkte werden je nach Dauer der Abbindezeit kontinuierlich zwischen 5, 10 und 15 Min gewählt. Die Eindringtiefe der Nadel als Funktion der Zeit zeigt den Abbindebeginn, wenn die Nadel nicht mehr durch den 40 mm hohen Fliesenkleberbrei hindurchfällt. Das Abbindeende zeigt sich dann, wenn die Nadel höchstens noch 1 bis 2 mm tief in den Fliesenkleberbrei eindringt. Als Ergebnis wird die Abbindezeit mit Abbindebeginn und Abbindeende in Stunden und Minuten angegeben.

Die Ergebnisse der Untersuchungen gehen aus Tabelle 8 hervor. -

**Tabelle 8:** Ergebnisse der Untersuchungen im Fliesenkleber

| Muster | Dimension | Nr. 1 | Nr. 2 | Nr.3 |
|---|---|---|---|---|
| MKX 40000 PP 01 (Referenzmuster) | % | 100 | - | - |
| erfindungsgemäßes Muster 4 | % - | | 100 | - |
| erfindungsgemäßes Muster 5 | % | - | - | 100 |
| Wasser-Feststoff-Faktor | - | 0,23 | 0,23 | 0,23 |
| Aufbruch Benetzung | % | 96 | 96 | 96 |
| Abrutschtest nach 30 s Gesamtgewicht max. Fliesengewicht | mm g g/cm$^2$ | 1,4 50 <2,0 | 1,0 50 <2,0 | 1,0 50 <2,0 |
| Offenzeit | | | | |

(fortgesetzt)

| Muster | Dimension | Nr. 1 | Nr. 2 | Nr.3 |
|---|---|---|---|---|
| eingelegt nach: | | | | |
| 5 min | % | 90 | 90 | 90 |
| 10 min | % | 70 | 60 | 55 |
| 15 min | % | 55 | 40 | 40 |
| 20 min | % | 30 | 20 | 35 |
| 25 min | % | 15 | 10 | 15 |
| 30 min | % | Spur | Spur | Spur |
| Haftzugfestigkeit nach EN 1348 | $N/mm^2$ | 1,55 | 1,74 | 1,81 |
| Normallagerung | $N/mm^2$ | 0,28 | 0,63 | 0,73 |
| Warmlagerung | $N/mm^2$ | 1,22 | 1,23 | 1,41 |
| Wasserlagerung | $N/mm^2$ | 0,60 | 0,64 | 0,97 |
| Frost/Tau-Wechsellagerung | | | | |
| Abbindezeit nach Vicat | | | | |
| Beginn nach | h: min | 12:15 | 10:30 | 10:45 |
| Ende nach | h: min | 15:15 | 13:30 | 14:00 |
| Dauer | h: min | 03:00 | 03:00 | 03:15 |

Bei gleichem Wasser-Feststoff-Faktor und ähnlichen Offenzeiten zeigen die erfindungsgemäß beanspruchten Celluloseether in Fliesenklebern Vorteile beim Abrutschen der Fliesen und verbesserte Haftzugfestigkeiten, wobei insbesondere höhere Festigkeiten unter den als besonders kritisch geltenden Bedingungen der Warmlagerung [Lagerbedingungen der Fliesen bei 70°C] aufgenommen werden.

Mit den erfindungsgemäß beanspruchten Celluloseethern wird zudem der Abbindebeginn der Fliesenkleber beschleunigt. Die hiermit formulierten Fliesenkleber binden im Vergleich zum Referenzmuster alle um ca. 1 - 2 h schneller ab, wodurch die Fliesen schneller bearbeitbar bzw. begehbar werden. Die Dauer des Abbindeprozeßes vom Abbindebeginn bis zum Abbindeende liegt mit ca. 3 Stunden überall auf einem vergleichbaren Niveau. -

**Patentansprüche**

1.   Verwendung von Polysacchariden oder Polysaccharidderivaten als Komponenten für Baustoffgemische, wobei die Polysaccharide oder Polysaccharidderivate erhältlich sind durch

a) Auflösen oder Quellen des Polysaccharids oder Polysaccharidderivats in 35 bis 99 Gew.-% Wasser, bezogen auf das Gesamtgewicht,
b) Überführung des Wassers aus dem gequollenen oder gelösten Polysaccharid oder Polysaccharidderivat in die Dampfphase und gleichzeitige Überführung des gelösten oder gequollenen Polysaccharids oder Polysaccharidderivats in den Festkörperzustand durch Eintrag mittels eines Gasstroms in ein Mahlwerk, wobei durch den Gasstrom das Wasser aus dem Polysaccharid oder Polysaccharidderivat ausgetrieben wird,
c) Abtrennung der Feststoffpartikel des Polysaccharids oder Polysaccharidderivates vom Gasstrom und gegebenenfalls Trocknung des Polysaccharids oder Polysaccharidderivats,

**dadurch gekennzeichnet, dass** die Baustoffgemische mineralisch gebundene Systeme und Fliesenkleber sind.

2.   Verwendung von Polysacchariden oder Polysaccharidderivaten nach Anspruch 1, wobei die Polysaccharidderivate erhältlich sind durch

a) Auflösung oder Quellung des Polysaccharids oder Polysaccharidderivates in 50 bis 80 Gew.-% Wasser, bezogen auf das Gesamtgewicht.
b) Überführung des Wassers aus dem gequollenen oder gelösten Polysaccharid oder Polysaccharidderivat in die Dampfphase und gleichzeitige Überführung des gelösten oder gequollenen Polysaccharids oder Polysaccharidderivates in den Festkörperzustand durch Eintrag des gelösten oder gequollenen Polysaccharids oder Polysaccharidderivates in eine Hochdrehzahl-Gasstrom-Prallmühle, wobei durch den Gasstrom eines überhitzten Wasserdampf/Inertgas-Gemisches oder Wasserdampf-Luft-Gemisches mit einem Wasserdampfanteil von 40 bis 99 Gew.-%, bezogen auf das Wasserdampf/Inertgas-Gemisch oder Wasserdampf/Luft-Gemisch, das Wasser ausgetrieben wird.

c) Abtrennung der Feststoffpartikel des Polysaccharids oder Polysaccharidderivates vom Gasstrom und ggf. Trocknung des Polysaccharids oder Polysaccharidderivates.

**3.** Verwendung von Polysacchariden oder Polysaccharidderivaten nach Anspruch 1 oder 2, **dadurch gekennzeichnet, dass** das Polysaccharid oder Polysaccharidderivat ein Polysaccharidester oder Polysaccharidether ist.

**4.** Verwendung von Polysacchariden oder Polysaccharidderivaten nach Anspruch 3, **dadurch gekennzeichnet, dass** der Polysaccharidether ein Celluloseether, Stärkeether oder Guarether oder Abmischungen derselben ist.

**5.** Verwendung von Polysacchariden oder Polysaccharidderivaten nach Anspruch 3, **dadurch gekennzeichnet, dass** der Polysaccharidester ein Celluloseester oder Stärkeester oder Abmischungen derselben ist.


**Claims**

**1.** Use of polysaccharides or polysaccharide derivatives as components for building material mixtures, wherein the polysaccharides or polysaccharide derivatives are obtainable by

a) dissolving or swelling the polysaccharide or polysaccharide derivative in 35 to 99 wt. % of water, based on the total weight,
b) converting the water from the swollen or dissolved polysaccharide or polysaccharide derivative into water vapor and simultaneously converting the dissolved or swollen polysaccharide or polysaccharide derivative into a solid state by introducing them into a mill by means of a gas stream whereby the water is expelled from the polysaccharide or polysaccharide derivative by the gas stream,
c) separating the solid particles of the polysaccharide or polysaccharide derivative from the gas stream and optionally drying the polysaccharide or polysaccharide derivative,

**characterized in that** the building material mixtures are minerally bound systems and tile adhesives.

**2.** Use of polysaccharides or polysaccharide derivatives according to claim 1, wherein the polysaccharide derivatives are obtainable by

a) dissolving or swelling the polysaccharide or polysaccharide derivative in 50 to 80 wt. % of water, based on the total weight,
b) converting the water from the swollen or dissolved polysaccharide or polysaccharide derivative into water vapor and simultaneously converting the dissolved or swollen polysaccharide or polysaccharide derivative into a solid state by introducing the dissolved or swollen polysaccharide or polysaccharide derivative into a high rotary speed gas stream impact mill whereby the water is expelled by the gas stream of a superheated steam/inert gas mixture or steam/air mixture having a steam content of from 40 to 99 wt. %, based on the steam/inert gas mixture or steam/air mixture,
c) separating the solid particles of the polysaccharide or polysaccharide derivative from the gas stream and optionally drying the polysaccharide or polysaccharide derivative.

**3.** Use of polysaccharides or polysaccharide derivatives according to claim 1 or 2, **characterized in that** the polysaccharide derivative is a polysaccharide ester or polysaccharide ether.

**4.** Use of polysaccharides or polysaccharide derivatives according to claim 3, **characterized in that** polysaccharide ether is a cellulose ether, a starch ether or a guar ether or mixtures thereof.

**5.** Use of polysaccharides or polysaccharide derivatives according to claim 3, **characterized in that** the polysaccharide ester is a cellulose ester or a starch ester or mixtures thereof.

**Revendications**

1. Utilisation de polysaccharides ou de dérivés de polysaccharides en tant que constituants de mélanges de matériaux de construction, lesquels polysaccharides ou dérivés de polysaccharides sont préparés par les opérations suivantes:

   a) dissoudre ou faire gonfler le polysaccharide ou le dérivé de polysaccharide dans 35 à 99 % d'eau, en poids rapporté au poids total;
   b) séparer l'eau, en la faisant passer en phase vapeur, d'avec le polysaccharide ou le dérivé de polysaccharide gonflé ou dissous, et faire passer en même temps à l'état solide le polysaccharide ou le dérivé de polysaccharide dissous ou gonflé, en faisant passer celui-ci dans un appareil broyeur, au moyen d'un courant de gaz, l'eau étant alors entraînée hors du polysaccharide ou du dérivé de polysaccharide par le courant de gaz;
   c) et séparer du courant de gaz les particules solides de polysaccharide ou de dérivé de polysaccharide, et faire éventuellement sécher le polysaccharide ou le dérivé de polysaccharide,

   **caractérisée en ce que** les mélanges de matériaux de construction sont des systèmes à liants minéraux et des colles à carrelage.

2. Utilisation de polysaccharides ou de dérivés de polysaccharides, conforme à la revendication 1, lesquels polysaccharides ou dérivés de polysaccharides sont préparés par les opérations suivantes:

   a) dissoudre ou faire gonfler le polysaccharide ou le dérivé de polysaccharide dans 50 à 80 % d'eau, en poids rapporté au poids total ;
   b) séparer l'eau, en la faisant passer en phase vapeur, d'avec le polysaccharide ou le dérivé de polysaccharide gonflé ou dissous, et faire passer en même temps à l'état solide le polysaccharide ou le dérivé de polysaccharide dissous ou gonflé, en faisant passer le polysaccharide ou le dérivé de polysaccharide dissous ou gonflé dans un broyeur centrifuge à courant de gaz et à haute vitesse de rotation, l'eau étant alors entraînée par le courant de gaz qui est constitué d'un mélange surchauffé de gaz inerte et de vapeur d'eau ou d'air et de vapeur d'eau dans lequel la quantité de vapeur d'eau représente de 40 à 99 % du poids du mélange de gaz inerte et de vapeur d'eau ou du mélange d'air et de vapeur d'eau;
   c) et séparer du courant de gaz les particules solides de polysaccharide ou de dérivé de polysaccharide, et faire éventuellement sécher le polysaccharide ou le dérivé de polysaccharide.

3. Utilisation de polysaccharides ou de dérivés de polysaccharides, conforme à la revendication 1 ou 2, **caractérisée en ce que** le dérivé de polysaccharide est un ester de polysaccharide ou un éther de polysaccharide.

4. Utilisation de polysaccharides ou de dérivés de polysaccharides, conforme à la revendication 3, **caractérisée en ce que** l'éther de polysaccharide est un éther de cellulose, un éther d'amidon ou un éther de guar, ou un mélange de telles substances.

5. Utilisation de polysaccharides ou de dérivés de polysaccharides, conforme à la revendication 3, **caractérisée en ce que** l'ester de polysaccharide est un ester de cellulose ou un ester d'amidon, ou un mélange de telles substances.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19754064
- EP 1127895 A
- US 4415124 A
- DE 2458998
- EP 0370447 A
- EP 0954536 A
- DE 19754064 A
- WO 9831710 A
- EP 0049815 A
- EP 0348046 A
- EP 0835881 A
- GB 2262527 A
- DE 19541945 A
- DE 19543933 A
- EP 0458328 A
- US 5047086 A


**In der Beschreibung aufgeführte Nicht-Patentliteratur**

- Ullmann's Encyclopedia of Industrial Chemistry. Verlag Chemie, 1986, vol. 5A
- **I. SCHRAGE.** Ullmanns Enzyklopädie der technischen Chemie. Verlag Chemie, Weinheim, 1974, vol. 9, 312